# EUROPEAN PATENT APPLICATION

(11) **EP 1 494 256 A1**
(43) Date of publication of application: **05.01.2005**
(21) Application number: 03715714.6
(22) Date of filing: 02.04.2003
(51) Int. Cl.: H01J 1/304, H01J 29/04, H01J 31/12, H01J 9/02

(54) **FIELD ELECTRON EMISSION FILM, FIELD ELECTRON EMISSION ELECTRODE AND FIELD ELECTRON EMISSION DISPLAY**

(30) Priority: 11.04.2002 JP 2002108983
(71) Applicant: Sony Corporation, Tokyo 141-0001 (JP)
(72) Inventor: ITOU, Hiroyuki, Shinagawa-ku, Tokyo 141-0001 (JP); YAGI, Takao, Shinagawa-ku, Tokyo 141-0001 (JP); MUROYAMA, Masakazu, Shinagawa-ku, Tokyo 141-0001 (JP); INOUE, Makoto, Shinagawa-ku, Tokyo 141-0001 (JP)
(74) Representative: Müller, Frithjof E., Dipl.-Ing.
(86) International application number: PCT/JP2003/004196
(87) International publication number: WO 2003/085688

(57) **Abstract**

It is a field electron emission film which is able to form a field electron emission film less in the amount of residual gas and stable in the amount of emitted electrons. Because it is formed in thin film, resistivity value of the film within the plane becomes even, and this is a field electron emission film having excellent smoothness, and higher electron emission property. Carbon nanotube structural body of 0.001 to 40 % by weight, and a heat decomposition product of 0.01 % by weight or more obtained by heat decomposition of a heat-decomposable metal compound are included. Organo-metallic compound, metal salt, organo-metallic salt compound and metal complex are preferable as the heat-decomposable metal compound.

## Description

### THECHICAL FIELD

The present invention relates to a field electron emission film configured as containing a carbon nanotube structural body, and a field electron emission electrode, and a field electron emission display device using the same. The field electron emission film of the present invention is adoptable to various applications including a field emission display, a scanning tunnel microscope and a field emission microscope in an extremely effective manner.

### BACKGROUND ART

Investigation into carbon nanotube was triggered by discovery by Iijima et al. in 1991 of multi-walled carbon nanotube as a byproduct of fullerene. The multi-walled carbon nanotube was found to be contained in a cathode deposit in the synthesis of fullerene by arc discharge using graphite rod electrodes, as having a concentric cylindrical structure of rolled multi-layered graphite sheets (graphene sheets) and having a diameter of several tens nanometers or around. Later in 1993, Iijima et al. succeeded in synthesizing a sooth containing a single-walled carbon nanotube having a diameter of 1 nm or around, by arc discharge using an iron powder catalyst. In the same period of time, they also discovered a single-walled carbon nanotube having a diameter of 1.2 nm by arc discharge using a cobalt catalyst. The single-walled carbon nanotube has a structure in which a single graphite sheet (graphene sheet) is rolled to form a cylinder having a diameter of several nanometers. Metal catalyst is not necessary for the synthesis of the multi-walled carbon nanotube, but is indispensable for the synthesis of the single-walled carbon nanotube. It is also possible to selectively synthesize single-walled carbon nanotubes which are different in the diameter depending on species of the catalyst to be used.

It is expected that the carbon nanotube is available as electronic materials and nanotechnology in a variety of fields by virtue of its geometrical and physicochemical features. Recently as application examples, it is expected to be applied to a flat panel display (field electron emission type) , a field electron emission type electron gun, a probe for a scanning probe microscope, a semiconductor integrated circuit based on the nanometer rule, hydrogen gas occlusion material and a nanobomb. Among others, a field electron emission electrode whichmakes use of its large field-electron emission efficiency attracts a public attention.

Known applications making use of this sort of a high field electron emission electrode include a field emission display (FED), a scanning tunneling microscope (STM) and a field emission microscope (FEM), wherein it is investigated aiming to be adopted to these applications.

The field electron emission electrode makes use of a phenomenon of electron emission into a vacuum space occurring even under normal temperature, which is enabled by applying an electric field to a metal material or semiconductor material *in vacuo,* which electric field being not smaller than the threshold value of these materials, so as to lower the energy barrier height at the surface of the metal material or semiconductor material, to thereby make it possible to increase the number of electrons capable of climbing over the energy barrier height by tunneling.

Conventional process for fabricating the electrodes of, for example, a field emission display (FED) adopts highly advanced techniques applicable to semiconductor manufacturing process, such as photolithography, sputtering, vacuum evaporation and so forth, wherein the electrode is fabricated by a stacking process *in vacuo.* In an representative fabrication, an insulating film is formed on the surface of an electrode substrate, and an electrode film for extracting electrons is formed on the insulating film. A resist is coated thereon, processed into a mask having a predetermined pattern, and through which a hole is formed for every electrode array by wet etching. Next, electron emission electrodes are formed by vacuum-evaporating an electrode material capable of emitting electrons, and the resist is removed to thereby finish the electrodes. Molybdenum (Mo) is used as the electrode material capable of emitting electrons, and is fabricated under process control so as to form a conical geometry. The reason why the conical geometry is formed is that the acute end can increase the field emission efficiency. This sort of special geometry needs complicated controls and a large number of fabrication processes *in vacuo,* and the fabrication processes takes a long time.

As described in the above, making use of a FED as a display based on the conventional technology suffers from a problem in the fabrication process and in difficulty in forming a larger electrode. This raises demands on development of a technique which needs only a small number of fabrication process steps *in vacuo* under easy control, and a field emission material available therefore.

As one material satisfying the demand, a carbon nanotube is expected for its ability of emitting electrons under a relatively low voltage, because its slim ends can produce a strong electric field under current supply.

Unlike the conventional method of fabricating a highly sophisticated field electron emission electrode by a large number of process steps, a method of using carbon nanotube as a field electron emission electrode can realize more stable current under lower degree of vacuum. This is supposed to be ascribable to an extra thin geometry of the ends of the carbon nanotube, an extra large electric conductivity, and a small work function as a consequence. Because each of the carbon nanotube can function as a micro-electron gun, it is made possible to arrange an extremely large number of electron guns per unit area. Also a method of directly growing the carbon nanotube on a substrate is under investigation.

As for conventional methods of fabricating the field electron emission film using carbon nanotube, a trial is made on a direct growth of carbon nanotubes on a cathode substrate by the chemical vapor deposition process (CVD) while controlling their length and thickness so as to be used as field electron emission sources, and another trial is made on formation of a field electron emission film by coating and drying an ink on a substrate, where the ink is prepared by mixing the carbon nanotube obtained by the conventional method with an appropriate solvent and an adhesive.

Of these, the methods of forming the field electron emission film using the carbon-nanotube-containing ink include the followings:

### (1) Technique of using Organic Resin as Adhesive

A method of preparing an ink using the carbon nanotube together with electro-conductive particles and so forth, using an organic resin as an adhesive, so as to reduce an amount of the solvent to thereby prepare a high viscosity ink. A screen is selected so as to adjust the film thickness to a target value, and the film is formed by printing. Metal particles or ITO particles are dispersed in the solution in order to ensure the electric conductivity. The obtained paste is coated on a substrate on the substrate by the screen printing method to form the film.

The dried film is sintered at an appropriate temperature to thereby carbonize the organic resin, and the product is subjected to an appropriate surface treatment for allowing the carbon nanotube. to expose on the surface (Japanese Laid-Open Patent Publications No. 2001-176380 and No. 2001-93404).

### (2) Technique of using Inorganic Adhesive

Materials generally referred to as water glass, such as sodium salts, potassium salt, lithium salt, etc. of silicic acid, boric acid and so forth, or silica-dispersed colloid are used as an adhesive. In general, sodium, potassium, lithium ions and so forth are removed, and ammonia is added for pH adjustment. Water is used as a solvent, to which the carbon nanotube is blended in an appropriate amount, to thereby prepare an ink. The ink is coated by the screen printing method similarly to as described in the above, which is followed by sintering and surface treatment (Japanese Laid-Open Patent Publication No. 2000-100318).

### (3) Technique of using Solder, etc.

A method of immobilizing the carbon nanotube on the substrate using a metal solder containing at least one element selected typically from Sn, In, Bi, Pb, etc. is used as an adhesive. The carbon nanotube is thoroughly mixed with the metal solder, or with carbon-dissolving metal, or with carbide-forming metal, or with low-melting-point metal, or with conductive polymer (silver paste), formed into a film, and finally sintered *in vacuo* at 800 °C for adhesion (Japanese Laid-Open Patent Publication No. 2000-141056).

Because the field emission display has a plurality of micro-sized electron guns arranged therein for the individual pixels, smaller distance between the electron gun and an anode, or a fluorescent material, will result in smaller pixel size. Because electrons emitted from the electron gun collides with the fluorescent material after being slightly spread, so that closer fluorescent material can make the spreading smaller when compared among the field electron emission electrodes having identical characteristics. It is necessary to downsize the electron gun as a whole in order to shrink the pixel, and this consequently requires reduction in thickness of the insulating film and the coated film of carbon nanotube.

The above-described conventional techniques, however, suffer from respective problems. Discussing now about residual gas in the field electron emission film, the field emission display accelerates electrons emitted from the cathode towards the anode, and allows them to collide with the fluorescent material to thereby cause light emission. It is therefore necessary for a successful electron emission to evacuate an atmosphere between the cathode and anode. The electrode having the carbon-nanotube-containing ink coated thereon is disposed in vacuo.

It is therefore necessary to thoroughly purge the residual gas out from the ink before being enclosed in the vacuum atmosphere. It is indispensable for the ink using any organic solvent not only to be dried but also to be sintered at a sufficiently high temperature. Also for the case where an inorganic adhesive is used, thorough removal of water used as a solvent is necessary.

The solvent component, in particular water contained in the adhesive is very difficult to be removed, and tends to remain on the display substrate. This makes flow of the electrons emitted from the carbon nanotube very unstable. This phenomenon is observed on the display as flicker on the screen.

Use of the organic resin is only available in a large thickness in view of ensuring a desirable adhesiveness even after the sintering. Use of the inorganic adhesive, using water as a solvent, not only results in a film rich in the residual gas even after the sintering, but also in a high resistivity of the film, and this causes a non-uniform distribution of electron emission sources. The both cases also suffer from a common problem of dependence of the film thickness on the size of the conductive particles which are added to the ink in order to ensure electric conductivity of the film. In other words, any particle size of the conductive particle larger than the thickness of the coated film results in non-uniformity in the in-plane resistivity of the film. It has therefore been difficult to form the field emission film of a desirable level based on the conventional ink composition.

The present invention was conceived after considering the above-described situation, and objects thereof are to provide a field electron emission film having a large electron emission efficiency, capable of stably yielding images when incorporated into a display, and have a dense film quality almost not causative of any damage to films in the later process steps, and to provide a field electron emission electrode and a field electron emission display device using the above-described field electron emission film capable of realizing high-definition image display.

### DISCLOSURE OF THE INVENTION

The present inventors had come to have an idea that provision of electric conductivity to the adhesive *per se* would be successful in suppressing the residual gas, and use of thus-devised field electron emission film would stabilize the electron emission, and could yield stable images when incorporated into a display device.

Considering the fact that the surface of the field emission film must basically be smooth as possible in view of ensuring uniformity in the amount of electron emission, the present inventors reached an idea that the film thickness would no more be limited by size of the conductive particles if electric conductivity can be provided to the adhesive *per se*. From these point of view, the inventors reached the present invention after investigations into the field electron emission film.

A first aspect of the present invention relates to a field electron emission film used for a field electron emission electrode, comprising 0. 001 to 40 % by weight of carbon nanotube structural body and 0.01 % by weight or more of a heat decomposition product obtained by heat decomposition of a heat-decomposable metal compound.

By coating and sintering an ink containing the heat-decomposable metal compound (organo-metallic compound, metal salt, organo-metallic salt compound, metal complex) on an electrode substrate, the heat decomposition product obtained after the sintering can function as an adhesive, and thereby the field electron emission film of the present invention is obtained as being dense, excellent in the adhesiveness, and less in the residual gas content. The conventional field electron emission film was less durable in the post-process steps when applied to the display due to a large thickness of the coated film and lack of denseness, whereas the present invention can provide the film free from these drawbacks.

The heat-decomposable metal compound is preferably an organo-metallic compound, metal salt, organo-metallic salt compound or metal complex. The heat decomposition product is preferably such as being composed of a plurality of metals. It is particularly preferable that the plurality of metals are Sn and at least one metal selected from In and Sb. It is still particularly preferable that the plurality of metals are Sn and In, where ratio of Sn to In is 6 at% or more. The thickness of the field electron emission film of the present invention is preferably 0.05 µm or more and 20 µm or less.

A second aspect of the present invention relates to a field electron emission electrode of 2-pole type, comprising a cathode and a field electron emission film sequentially formed on a support, wherein the field electron emission film comprises 0.001 to 40 % by weight of carbon nanotube structural body and 0. 01 % by weight or more of a heat decomposition product obtained by heat decomposition of a heat-decomposable metal compound.

A third aspect of the present invention relates to a field electron emission electrode of 3-pole type, comprising a cathode, an insulating film and a gate electrode sequentially formed on a support, an opening formed in common in the insulating film and the gate electrode, and a field electron emission film formed at least on the cathode exposed in the opening, wherein the field electron emission film comprises 0.001 to 40 % by weight of carbon nanotube structural body and 0.01 % by weight or more of a heat decomposition product obtained by heat decomposition of a heat-decomposable metal compound.

A fourth aspect of the present invention relates to a field electron emission display device comprising a cathode panel having a plurality of field electron emission electrodes disposed thereon, an anode panel having a fluorescent layer and an anode disposed thereon, the both panels being bonded at the individual circumferential portions thereof, wherein the electrode set forth in the aforementioned third aspect is used as the field electron emission electrode.

### BRIEF DESCRIPTION OF THE DRAWINGS

Fig. 1 is a schematic partial sectional view of a field electron emission display device according to a second embodiment of the present invention;
Fig. 2 is a schematic perspective view of one field electron emission film in the field electron emission display device according to the second embodiment of the present invention;
Fig. 3 is a schematic partial end view of a support and so forth for explaining a method of fabricating the field electron emission film according to the second embodiment of the present invention;
Figs. 4A to 4D are schematic partial end views of the support and so forth for explaining a method of fabricating an anode panel of the field electron emission display device according to the second embodiment of the present invention;
Fig. 5 is a schematic partial end view of a support and so forth for explaining a method of fabricating the field electron emission element according to a third embodiment of the present invention;
Fig. 6 is a schematic partial end view of a field electron emission device according to the third embodiment of the present invention;
Fig. 7 is a schematic drawing showing an exemplary apparatus for producing the carbon nanotube;
Fig. 8 is a schematic drawing of a spray coating apparatus;
Fig. 9 is a schematic drawing of a 2-pole evaluation device;
Fig. 10 is a sectional view showing a structure of the field electron emission electrode in a 3-pole evaluation device;
Fig. 11 is a graph relating to a plurality of test results, showing relations of dopant concentration and field electron emission electrode, using species of heat decomposition product as a parameter;
Fig. 12 is a characteristic curve of the field electron emission electrode in a 2-pole structure obtained in Experimental Case 30; and
Fig. 13 is characteristic curves of the field electron emission electrode in a 3-pole structure obtained in Experimental Case 30, using thickness of the insulating film as a parameter.

### BEST MODES FOR CARRYING OUT THE INVENTION

Next paragraphs will describe embodiments of the present invention.

### (1) Embodiment 1 (Field Electron Emission Film)

The carbon nanotube structural body in the context of the present invention means carbon nanotube and/or carbon nanofiber. In the present invention, it may be the carbon nanotube or carbon nanofiber, or still may be a mixture of them.

The carbon nanotube and carbon nanofiber differ in their crystallinity. Carbon atoms individually having an sp² bond generally configure a six-membered ring composed of six carbon atoms, and gathering of the six-membered ring configures a carbon graphite sheet. The carbon nanotube is a rolled-up tubular structure of the carbon graphite sheet. Both of a single-walled carbon nanotube composed of a single rolled-up sheet and a multi-walled carbon nanotube composed of a two or more rolled-up sheets are allowable. On the other hand, the carbon nanofiber is a fiber-formed stack of fragments of the carbon graphite sheets, being not rolled-up but stacked to form a fiber. Difference between the carbon nanotube or carbon nanofiber and carbon whisker is not unclear, but generally, the carbon nanotube or carbon nanofiber has a diameter of 1 µm or below, typically 1 nm to 300 nm or around.

The carbon nanotube and carbon nanofiber, which are the carbon nanotube structural bodies, preferably have a powdery form in a macroscopic sense. Methods of producing the carbon nanotube and carbon nanofiber include the PVD process such as publicly-known arc discharge method and laser abrasion method, and various CVD processes such as plasma CVD method, laser CVD method, thermal CVD method, vapor-phase synthetic method and vapor-phase epitaxy.

The carbon nanotube structural body used in the present invention preferably has a diameter of 0.7 to 100 nm, and a length of 0.5 to 100 µm.

In the present invention, the content of the carbon nanotube structural body is preferably within a range from 0.005 % by weight to 5 % by weight, both ends inclusive, of the total weight of the ink.

The present invention also makes it possible to obtain the field electron emission film well suppressed in generation of the residual gas and expected to have a sufficient adhesiveness, by preparing and coating an ink containing a heat-decomposable metal compound possibly converted into an inorganic material by sintering. Use of an adhesive causative of only a small amount of residual gas can stabilize the electron emission, and can prevent the image from being' destabilized when used in the display. Because it is devised so as to thermally decompose the metal compound by sintering to thereby produce a dense inorganic film, the coated film can almost completely be prevented from being damaged in the post-process in the fabrication of the display. The present invention, providing electric conductivity to the adhesive *per se*, makes it possible to facilitate design of the ink, and this can prevent the coated film from being considerably increased in the resistivity even after being added with insulating particles or the like.

The field electron emission film of the present invention can be obtained as having desired characteristics without being blended with any granular conductive materials, because the heat decomposition product of the heat-decomposable metal compound has electric conductivity.

One example of the ink for forming the field electron emission film of the present invention is a solution of the heat-decomposable metal compound, obtained by diluting the compound with a solvent to an appropriate concentration and allowing the carbon nanotube structural body to uniformly disperse therein. The ink for the film formation can be prepared also by uniformly dispersing the carbon nanotube structural body together with the heat-decomposable metal compound into an appropriate solvent.

The metal compound can be exemplified by organo-metallic compound (including organic acid metal compound) , metal salt, organo-metallic salt compound and metal complex.

Examples of the metal salt include halide, nitrate and acetate. Of these metal salts, halide can be exemplified as a particularly effective one in the present invention. Examples of solution of the organic acid metal compound include those obtained by dissolving organo-tin compound, organo-indium compound, organo-zinc compound or organo-antimony compound, for example, in an acid (hydrochloric acid, nitric acid or sulfuric acid, for example) , and by further diluting them with some organic solution. Examples of solution of the organo-metallic compound include those obtained by dissolving organo-tin compound, organo-indium compound, organo-zinc compound or organo-antimony compound, for example, in an organic solvent. It is also allowable to use an organo-metallic compound having all of organic chain, halogen and metal. It is still also allowable to use the metal complex in which a metal is chelated by a chelating agent.

Functional groups in the organic chain possibly bond with a metal element to form the organo-metallic (salt) compound can be exemplified by straight-chained or branched alkyl group, alkoxy group, ester group, carbonyl group, ether group, amido group, benzoyl group, phenyl group, epoxy group, animo group, and amido group.

Examples of the heat-decomposable metal compound include compounds having one or two groups selected from alkoxy group, alkyl group, acetyl group, halogen, phenyl group and so forth such as indium triacetate, indium triacetate hydrate, indium acetyl acetonate, indium halide, indium tri-tert-butoxide, indium trimethoxide, indium triethoxide and indium triisopropoxide; and compounds having one or two groups selected from alkoxy group, alkyl group, acetyl group, halogen, phenyl group and so forth such as tin halide, tin tetraethoxide, tin tetraisopropoxide and tin tetrabutoxide.

The ink used for forming the field electron emission film of the present invention may contain, besides the above-described components, a solvent such as water or any of organic solvents such as ethanol, butyl acetate, toluene and isopropanol; any of chelating agents such as ethylenediamine, pyridine, propylenediamine, diethylenetriamine, triethylenetetramine, 2,2'-bipyridine, 1,10-phenanthroline, etylenediamine tetraacetate, dimethylglyoximate, glycinate, triphenylphosphine and cyclopentadienyl; dispersant; and surfactant.

The field electron emission film of the present invention can be obtained by coating and sintering the above-described ink for forming the field electron emission electrode on the electrode. The heat-decomposable metal compound, which is an ink component, decomposes by the sintering to produce the heat decomposition products which differ depending on species of the metals, which are typically metal oxide, metal halide oxide, and free metal. For example, tin oxide can be produced from DBTDA (dibutyl tin diacetate), and ITO (indium tin oxide) can be produced from a mixture of IC (indium chloride) and TCT (tin tetrachloride). These heat decomposition products are the conductive materials which support the carbon nanotube structural body and function as an adhesive to the electrode substrate.

Examples of possible methods of coating the ink for forming the field electron emission electrode include spray coating, die coating, roll coating, dip coating, curtain coating, spin coating and gravure coating, wherein the spray coating is particularly preferable. The field electron emission film is sintered after forming the coated film by the above-described method. Preferable conditions for the sintering of the coated ink film are properly determined taking composition of the metal compound as an ink component into consideration, wherein the sintering temperature generally falls in a range from 300 °C to 600 °C. Because the decomposition reaction of organic functional groups or halogen can proceed at relatively low temperatures, it is made possible to use a low-melting-point glass for the substrate. It is also allowable to adopt UV irradiation in place of the sintering. The thickness of the field electron emission film is preferably adjusted within a range from 0.05 to 20 µm.

Metal elements, other than indium (In), tin (Sn) and antimony (Sb), possibly forming the heat decomposition product in the field electron emission film of the present invention include zinc, aluminum, gold, silver, silicon, germanium, cobalt, zirconium, titanium, nickel, platinum and manganese. The metal compound is preferably composed of a plurality of metals in view of lowering the threshold value. Specific examples thereof include indium-tin, and tin-antimony as described later in the examples. A combination of a metal and a halogen, such as tin-fluorine (F) is also allowable. In particular, a single metal, or one of the plurality of metal is preferably Sn in view of affinity with the dopant.

As for a combination of In-Sn, a ratio of mixing of Sn atom is preferably 6 of above per 100 of In atom. As for a combination of Sn-Sb, a ratio of mixing of Sb atom is preferably 4 or above per 100 of Sn atom. As for a combination of Sn-F, a ratio of mixing of F atom is preferably 4 or above per 100 of Sn atom.

It is particularly preferable that the field electron emission film always contains Sn. Sn has a large affinity to the dopant, and can readily form an electrode film having a uniform property. Examples of the field electron emission film containing tin include ITO, FTO (fluorine tin oxide) and ATO (antimony tin oxide).

### (2) Embodiment 2 (Double-Pole Field Electron Emission Electrode and Field Electron Emission Display Device)

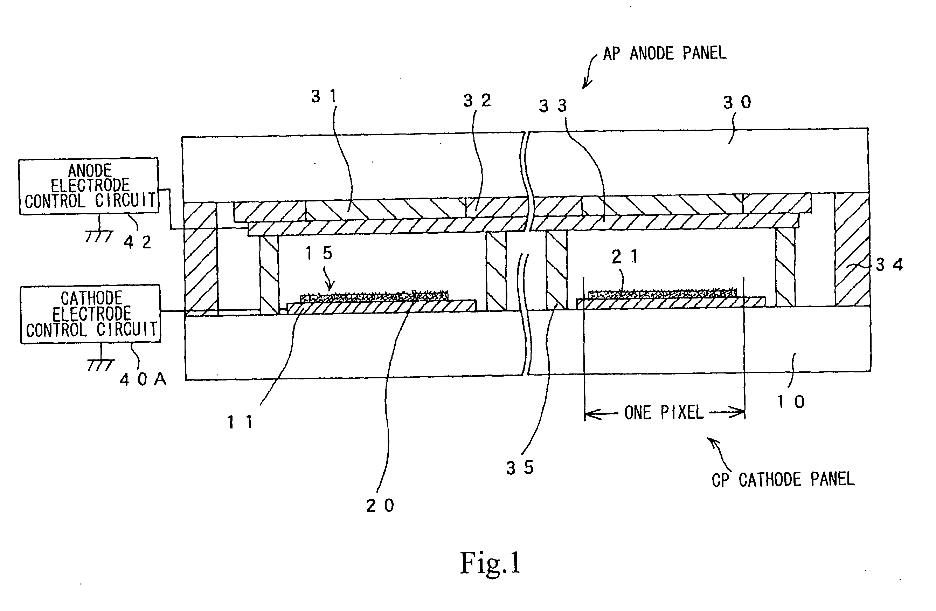

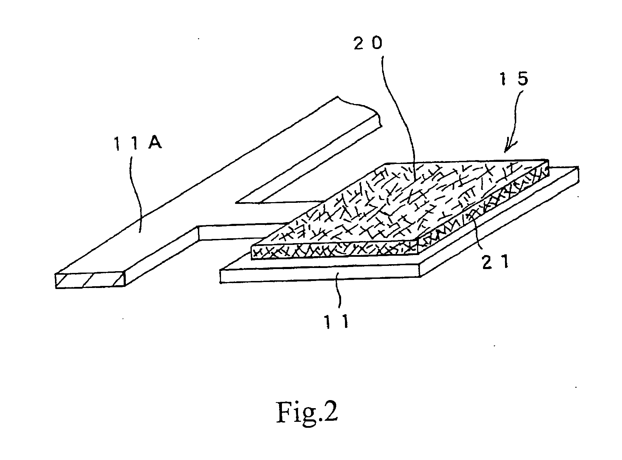

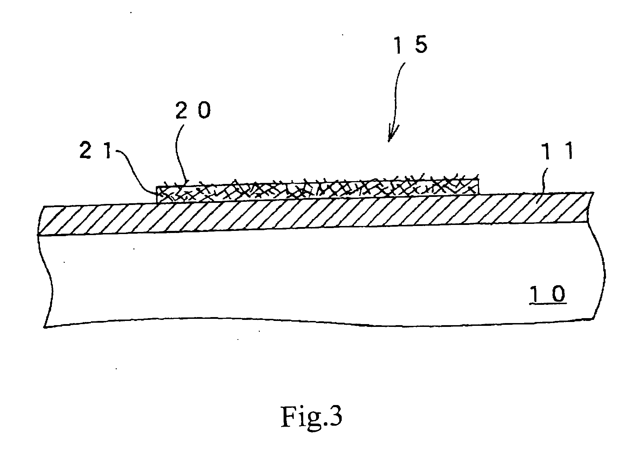

The field electron emission electrode of the present embodiment will be explained referring to Fig. 1 to Fig. 3. The field electron emission electrode is used for the field electron emission display device as shown in Fig. 1. The device comprises, as shown in Fig. 2 and Fig. 3, a cathode 11 disposed on a support 10, and a field electron emission film 15 disposed on the cathode 11. The field electron emission film 15 further comprises a matrix (the heat decomposition product of the metal compound) 21 and the carbon nanotube structural body buried in the matrix 21 while leaving the end portions projected out from the surface. The field electron emission film 15 is similar to that described above in Embodiment 1.

The display device according to this embodiment is configured, as shown in Fig. 1, so that a cathode panel CP having a plurality of field emission electrodes formed thereon, and a fluorescent material layer 31 and an anode panel AP are bonded on the circumferential portions thereof, thereby having a plurality of pixels. The cathode panel CP of the display device of this embodiment has a large number of electron emission areas, composed of a plurality of above-described field emission electrodes, arranged in the valid area thereof so as to form a two-dimensional matrix.

The cathode panel CP has, in the invalid area thereof, a through-hole (not shown) for evacuation, to which a chip tube (not shown) which is to be sealed under fusion after the evacuation is connected. A frame 34 is composed of a ceramic or glass, and is typically 1.0 mm in height. In some cases, it is also allowable to use only the adhesive in place of the frame 34.

The anode panel AP specifically comprises a substrate 30, the fluorescent material layer 31 formed on the substrate 30 according to a predetermined pattern (e.g., stripe pattern or dot pattern), and an anode 33 covering the entire surface of the valid area, and being typically composed of an aluminum film. On the substrate 30 between the adjacent fluorescent material layers 31, 31, a black matrix 32 is formed. The black matrix 32 is, however, also omissible. As far as a monochrome display device is concerned, it is not always necessary to form the fluorescent layer 31 according to a predetermined pattern. It is also allowable to dispose an anode composed of a transparent conductive film such as ITO between the substrate 30 and the fluorescent material layer 31, or it is still also allowable to configure the anode panel using the anode 33 composed of a transparent conductive film disposed on the substrate 30, the fluorescent material layer 31 and the black matrix 32 formed on the anode 33, and a light-reflective conductive film composed of aluminum (Al) formed on the black matrix 32 and electrically connected to the anode 33.

One pixel comprises the strip-formed cathode 11 on the cathode panel side, the field electron emission film 15 formed thereon, and the fluorescent material layer 31 arranged in the valid area of the anode panel AP so as to oppose with the field electron emission film 15. The valid area has this sort of pixels in a number of several hundreds of thousands to several millions arranged thereon.

Between the cathode panel CP and anode panel AP, spacers 35 are disposed in the valid area at regular intervals, as an auxiliary means for maintaining the distance between the panels constant. Geometry of the spacer 35 is not limited to cylinder, but also may be sphere or stripe-patterned diaphragm (rib). It is not always necessary to dispose the spacers 35 on four corners of every overlapped region of all cathodes, and both of more scarce arrangement and irregular arrangement are allowable.

The display device controls voltage to be applied to the cathode 11 on the single pixel basis. The planar shape of the cathode 11 is a near-rectangular shape as schematically shown in Fig. 2, and each cathode 11 is connected to a cathode control circuit 40A via a wiring 11A and a switching element (not shown) typically comprising a transistor. The anode 33 is connected to an anode control circuit 42. When voltage larger than the threshold value is applied to the individual cathodes 11, electrons are emitted from the field electron emission film 15 based on the quantum tunneling effect with the aid of electric field formed by the anode 33, and the emitted electrons are attracted to the anode 33 and collide with the fluorescent material layer 31. The luminance is controlled by voltage applied to the cathode 11.

In a specific procedure of assembling the display device, the anode panel AP and cathode panel CP are arranged so as to oppose the fluorescent material layer 31 to the field emission electrode as shown in Fig. 1, and the anode panel AP and cathode panel CP (more specifically, the substrate 30 and support 10) are bonded at the circumferential portions thereof while placing the frame 34 in between. In the bonding, a frit glass is coated on the bonding portion of the frame 34 and anode panel AP, and on the bonding portion of the frame 34 and cathode panel CP, the anode panel AP, cathode panel CP and frame 34 are bonded, the frit glass is dried, and then sintered at approximately 450°C for 10 to 30 minutes. The space surrounded by the anode panel AP, cathode panel CP, frame 34 and frit glass is then evacuated through the through-hole and chip tube, and the chip tube is then sealed under fusion when the pressure of the space reached as low as 10⁻⁴ Pa or around. This makes the space surrounded by the anode panel AP, cathode panel CP and frame 34 vacuum. The display device is completed after making some wiring with necessary external circuits.

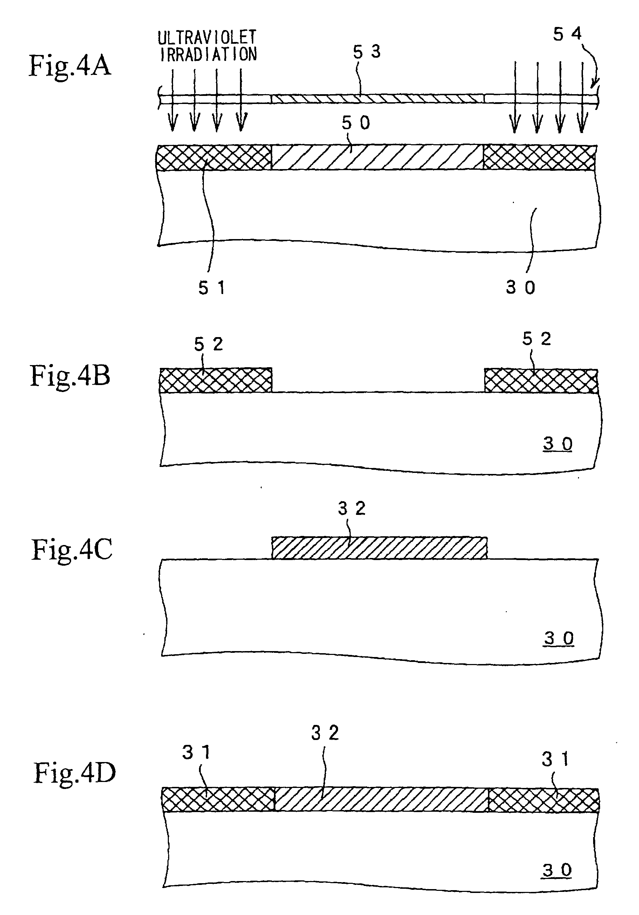

Next paragraphs will describe an exemplary method of fabricating the anode panel AP used in the display device shown in Fig. 1, referring to Fig. 4A to Fig. 4D.

First, a light-emitting crystal particle composition is prepared. For this purpose, a dispersant is allowed to disperse in a pure water, and stirred using a homomixer at 3, 000 rpm for 1 minute. Next, a light-emitting crystal particle is added to the pure water having the dispersant already dispersed therein, and the dispersion is stirred using a homomixer at 5,000 rpm for 5 minutes. Thereafter the dispersion is added typically with polyvinyl alcohol and ammonium dichromate, thoroughly stirred, and filtered.

In the fabrication of the anode panel AP, a photosensitive film 50 is formed (coated) over the entire surface of the substrate 30 typically composed of a glass. The photosensitive film 50 formed on the substrate 30 is then exposed to ultraviolet radiation emitted from a exposure light source (not shown) and passed through openings 54 formed in a mask 53, to thereby form a photo-sensitized area 51 (see Fig. 4A). The photosensitive film 50 is then developed so as to selectively remove it, to thereby leave the residual portion of the photosensitive film (the photosensitive film after the exposure and development) 52 on the substrate 30 (see Fig. 4B) . Next a carbon agent (carbon slurry) is coated over the entire surface, dried, sintered, and is then subjected to the lift-off process so as to remove the residual portion 52 of the photosensitive film together with the carbon agent coated thereon to thereby form the black matrix 32 composed of the carbon agent on the exposed substrate 30, and the residual portion 52 of the photosensitive film is removed (see Fig. 4C) . Thereafter on the exposed substrate 30, the individual fluorescent material layers 31 of red, green and blue are formed (see Fig. 4D). More specifically, light-emitting crystal particle compositions prepared using the individual light-emitting crystal particles (fluorescent particles) are available, wherein a possible process is such as coating, for example, the red photosensitive light-emitting crystal particle composition (fluorescent slurry) over the entire surface, which is followed by light exposure and development, next by coating the green photosensitive light-emitting crystal particle composition (fluorescent slurry) over the entire surface, which is followed by light exposure and development, and further by coating the blue photosensitive light-emitting crystal particle composition (fluorescent slurry) over the entire surface, which is followed by light exposure and development. Thereafter, the anode 33 composed of an aluminum film of approximately 0.07 µm thick is formed on the fluorescent material layer 31 and black matrix 32 by the sputtering process. It is also allowable to form the individual fluorescent material layers 31 by the screen printing method or the like.

It is to be noted that the anode may be styled so that the valid area thereof is covered with a single sheet of conductive material, or may be styled so that one or a plurality of field electron emission films, or anode units respectively corresponded to one or a plurality of pixels are collectively formed.

One pixel can also be configured by a stripe-patterned cathode, the field electron emission film formed thereon, and a fluorescent material layer arranged in the valid area of the anode panel so as to oppose with the field electron emission film. In this case, also the anode has the stripe form. A projected image of the stripe-patterned cathode and a projected image of the stripe-patterned anode cross normal to each other. Electrons are emitted from the field electron emission film which falls within an area where the projected images of the anode and cathode overlap with each other. The display device of this sort of configuration can be driven by so-called passive matrix system. More specifically, a relatively negative voltage is applied to the cathode, and a relatively positive voltage is applied to the anode. As a consequence, electrons are selectively emitted from the field electron emission film which falls in the anode/cathodes overlapped region of the row-selected cathode and line-selected anode (or line-selected cathode and row-selected anode) out into the vacuum space, and the electrons are attracted by the anode to thereby to collide with the fluorescent material layer composing the anode panel, and thereby the fluorescent material layer is excited and allowed to emit light.

To fabricate thus-configured field electron emission electrode, it is all enough to form a conductive material layer for forming the cathode, which is typically composed a chromium (Cr) layer formed by the sputtering process, on the support 10 typically composed of a glass substrate, and to pattern the conductive material layer by the publicly-known lithographic technique and the RIE process, to thereby form the stripe-patterned cathode 11, in place of rectangular cathode, on the support 10. Order of processes of plasma processing, electric-field-assisted orientation processing, annealing and various plasma processes are substantially arbitrary. The same will apply also to the embodiment below.

### (3) Embodiment 3 (3-Pole Field Electron Emission Electrode and Field Electron Emission Display Device)

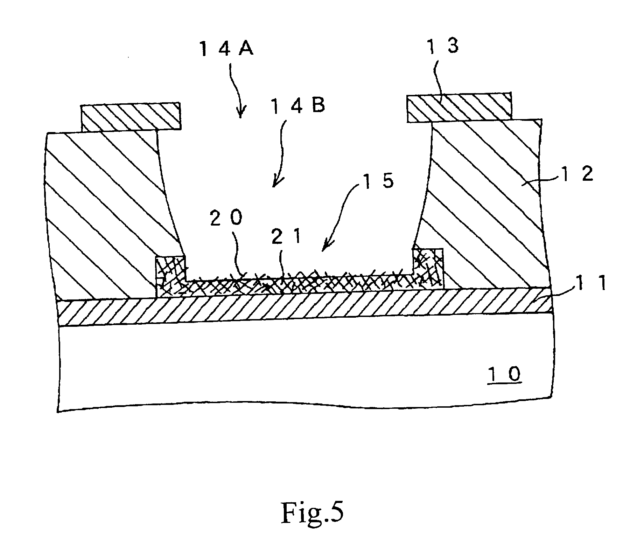

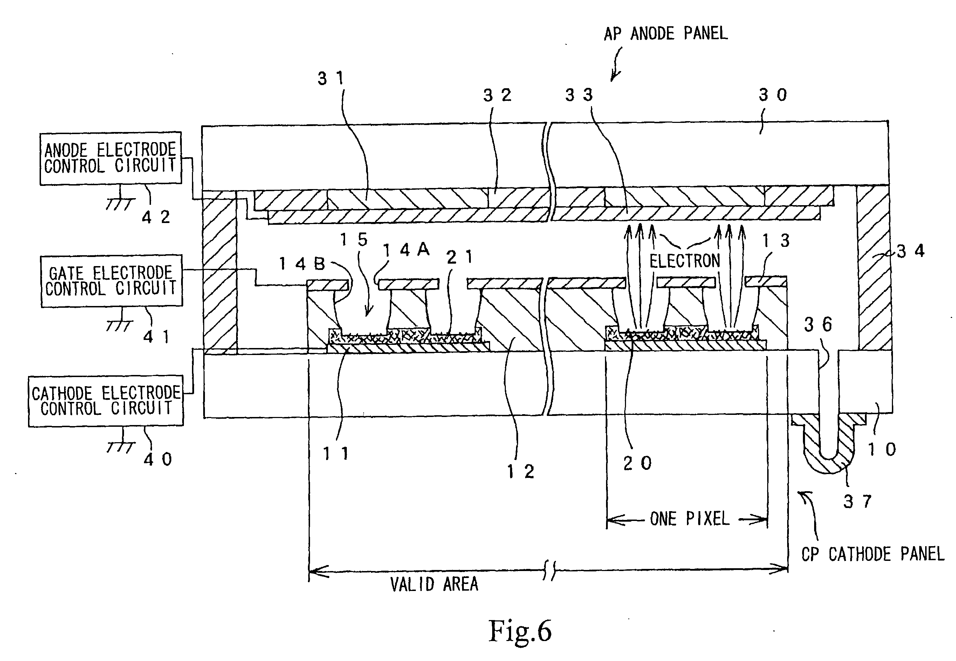

A schematic partial end view of the field electron emission electrode according to this embodiment is shown in Fig. 5, and a schematic partial end view of the field electron emission device is shown in Fig. 6.

The field electron emission electrode comprises the cathode 11 formed on the support 10, an insulating layer 12 formed on the support 10 and cathode 11, a gate electrode 13 formed on the insulating layer 12, openings formed in the gate electrode 13 and insulating film 12 (a first opening 14A formed in the gate electrode 13 and a second opening 14B formed in the insulating layer 12) , and the field electron emission film 15 exposed at the bottom portion of the second opening 14B. The field electron emission film 15 is same as that according to Embodiment 1, and comprises the matrix 21 and the carbon nanotube 20 buried in the matrix 21 while leaving the end portions projected out from the surface.

The display device comprises the cathode panel CP having a plurality of the above-described field emission electrodes formed in the valid area thereof, and the anode panel AP, comprises a plurality of pixels, and each pixel comprises a plurality of field emission electrodes, and the anode 33 and the fluorescent material layer 31 disposed on the substrate 30 so as to oppose with the field emission electrodes. The anode has a sheet form covering the valid area. The cathode panel CP and anode panel AP are bonded on the circumferential portions thereof while placing the frame 34 in between. Although the partial end view shown in Fig.6 illustrates the cathode panel CP as having two each of openings 14A, 14B and field electron emission films 15 per one cathode 11 for simplicity, the configuration is by no means limited thereto, and the basic configuration of the field emission electrode is as shown in Fig. 5. In the invalid area of the cathode panel CP, there is provided a through-hole 36 for evacuation, to which a chip tube 37, which is sealed under fusion after the evacuation, is connected. It is to be noted that Fig. 6 shows a finished state of the display device, and the illustrated chip tube 37 has already been sealed under fusion. Spacers are not illustrated.

Configuration of the anode panel AP can be same as that of the anode panel AP explained in Embodiment 2, and will not be detailed herein.

In the display operation of this display device, a relatively negative voltage is applied from the cathode control circuit 40 to the cathode 11, a relatively positive voltage is applied from a gate electrode control circuit 41 to the gate electrode 13, and a positive voltage still larger than that applied to the gate electrode 13 is applied from the anode control circuit 42 to the anode 33. In the display operation of this display device, a scanning signal is input from the cathode control circuit 40 to the cathode 11, and a video signal is input from the gate electrode control circuit 41 to the gate electrode 13. It is also allowable to input a video signal from the cathode control circuit 40 to the cathode 11, and a scanning signal is input from the gate electrode control circuit 41 to the gate electrode 13. With the aid of electric field generated upon application of voltage between the cathode 11 and gate electrode 13, electrons are emitted out from the field electron emission film 15 based on quantum tunneling effect, and the electrons are attracted by the anode 33 to thereby collide with the fluorescent material layer 31. As a consequence, the fluorescent material layer 31 is excited and allowed to emit light, and thereby a desired image is obtained.

Other embodiments of the field electron emission electrode and field electron emission display device are same as those described above in Embodiment 2 or in the prior art, and will not be described herein.

Next, examples of the present invention will be described referring to the attached drawings.

### Experimental Cases 1 to 34

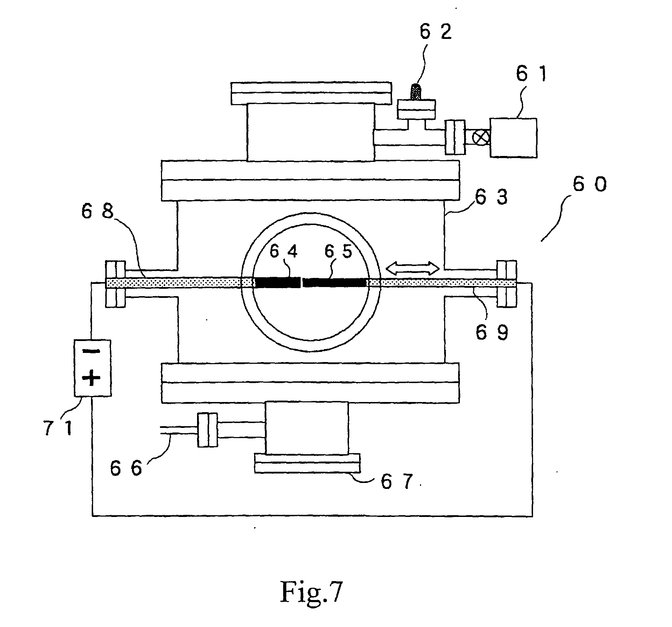

Carbon nanotubes having sizes listed in Tables 1, 2 were obtained by purifying SWNTs (single-walled carbon nanotubes) prepared by using an arc-discharge apparatus 60 (carbon nanotube manufacturing apparatus), shown in Fig. 7, by wet purification. Those having purities of 80% or above were used. A carbon nanotube of 100nm in diameter and 100µm in length used herein was VGCF-G, a product of Showa Denko K.K.

The carbon nanotube manufacturing apparatus 60 will now be explained. A discharge chamber 63 is configured as being evacuated by a rotary pump 61. Evacuated state of the discharge chamber 63 is measured by a vacuum gauge 62. A catalyst-containing graphite material 65 is disposed on the anode 69 side of the discharge chamber 63, and a graphite material 64 is disposed on the cathode 68 side. In the manufacturing process of the carbon nanotube, helium gas is introduced through a He gas introduction port 66 into the discharge chamber 63, and voltage is applied by a DC power source 71 between the anode 69 and cathode 68 so as to activate discharge therebetween. The discharge makes the catalyst-containing graphite material 65 evaporate, wherein a portion of the evaporated carbon condenses in the vapor phase, and adheres in a form of soot on the inner wall of the discharge chamber 63. The generated soot is recovered through a soot collection port 67 disposed at the bottom portion of the discharge chamber 63. The carbon nanotube can be obtained by treating the soot according to the publicly-known wet purification process.

According to the present invention, an ink for forming the field electron emission film, containing thus-obtained carbon nanotube, a heat-decomposable metal compound and a solvent, was prepared. In this process, the ink was prepared by thoroughly mixing the solvent, carbon nanotube and metal compound particle respectively in predetermined concentrations. The solvent used herein was ethanol (common for all Experimental Cases).

As listed in Tables 1 and 2 below, dibutyl tin diacetate (DBTDA) was used as the metal compound in Experimental Cases 1 to 4 and Experimental Cases 13 to 18, tin tetrabutoxide (TButT) in Experimental Cases 5 to 8, and tin tetrachloride (TCT) in Experimental Cases 9 to 12, respectively. In addition, tin tetrachloride and ammonium fluoride (AF) were used in combination in Experimental Cases 19 to 23, tin tetrachloride and triphenyl antimony (TPA) were used in combination in Experimental Cases 24 to 28, and indium chloride (IC) and tin tetrachloride were used in combination in Experimental Cases 29 to 34, respectively.

For Experimental Cases 19 to 34, amount of addition of the additives were expressed in mol% assuming the amount of the base material as 100. For example in Experimental Case 19, AF was added in an amount of 5 mol% per 100 mol of TCT as a base material. It is to be noted that the above-described additives contain elements which function as dopants in the metals composing the base materials, and can produce, upon sintering of the ink coated film, oxides or halogenated oxides in which the dopant elements bind with the metal elements. More specifically, Experimental Cases 19 to 23 use TCT as the base material and AF as the additive (fluorine atom acts as a dopant) , and Experimental Cases 24 to 28 use TCT as the base material and TPA as the additive (antimony acts as a dopant). Experimental Cases 29 to 34 use IC as the base material, and TCT as the dopant (tin acts as a dopant).

In Experimental Cases 19 to 23, ratio of blending of AF (ammonium fluoride) to TCT was varied in order to investigate the effects. In these Experimental Cases, the sintering produces FTO, wherein fluorine atom acts as a dopant. In Experimental Cases 24 to 28, ratio of blending of TPA to TCT was varies in order to investigate the effects. In these Experimental Cases, the sintering produces ATO, wherein antimony atom acts as a dopant. In Experimental Cases 29 to 34, ratio of blending of TCT to IC was varied in order to investigate the effects. In these Experimental Cases, the sintering produces ITO, wherein tin acts as a dopant.

In Tables 1 and 2, "CNT (carbon nanotube) concentration in coated film (wt%)" indicates the weight of carbon nanotube assuming the total weight of film remained after heat decomposition of the heat-decomposable metal compound as 100.

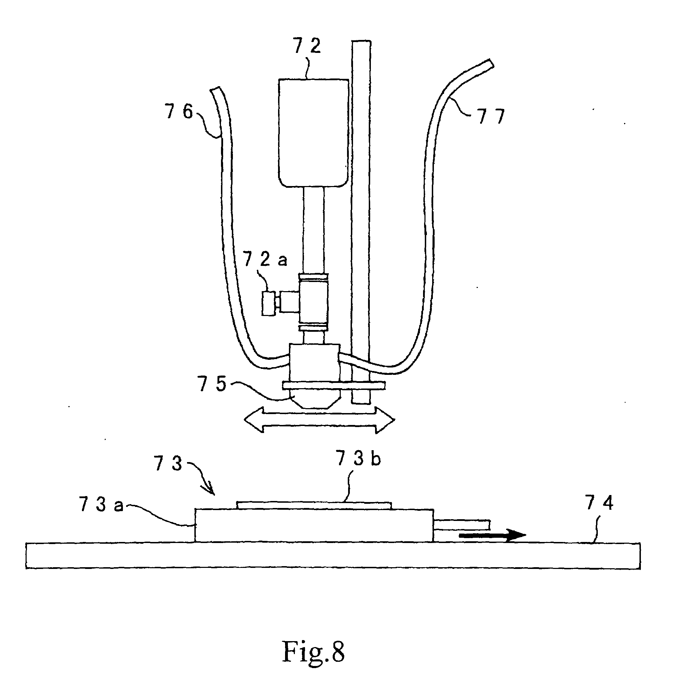

Next, the field electron emission film was formed using thus-obtained ink on the electrode substrate, and evaluated. The spray coating apparatus shown in Fig. 8 was used for the coating of the ink onto the electrode substrate (formation of a coated film of the field electron emission film). The thickness of the spray-coated film after drying was set to 5 µm.

Configuration of the spray coating apparatus used herein and a method of coating the ink using the apparatus will be explained referring to Fig. 8. The main unit of the coating apparatus is configured by disposing an ink tank 72 on the upper portion, a nozzle 75 in the lower portion, a cock 72a in the middle portion, and an not-illustrated flow control valve at a predetermined position between the cock 72a and nozzle 75. An air tube 76 and an valve-controlling air tube 77 are connected just above and in close proximity of the nozzle 75 of the main unit. The main unit is freely movable in the direction indicated by the arrow, and also movable back and forth in the direction normal to the sheet (freely movable in the X and Y directions).

In the ink coating process, the field electron emission electrode substrate 73a is fixed by the vacuum chucking at a predetermined position on an air chuck 74. The cock 72a is released, a compressed air adjusted at a predetermined pressure is supplied through the valve-controlling air tube 77 to the flow control valve, and at the same time the compressed air is supplied through the air tube 76. This allows the ink in the ink tank 72 to be sprayed from the nozzle 75 onto the electrode substrate 73a. In the coating process, the electrode substrate 73a is set freely movable in the X and Y directions. It is to be noted that reference numeral 73 in Fig. 8 expresses the field electron emission electrode, and reference numeral 73b expresses the ink coated film.

The ink coated film was dried in the air at 200 °C, sintered at 470 °C for 30 minutes, and surface-treated so as to allow the carbon nanotube to expose on the surface, and thereby the electrode substrate (sample) for the field electron emission electrode was fabricated. The electrode substrate was cut in an appropriate size to thereby obtain 2-pole-type field electron emission electrode and 3-pole-type field electron emission electrode as described later, and these electrodes were evaluated.

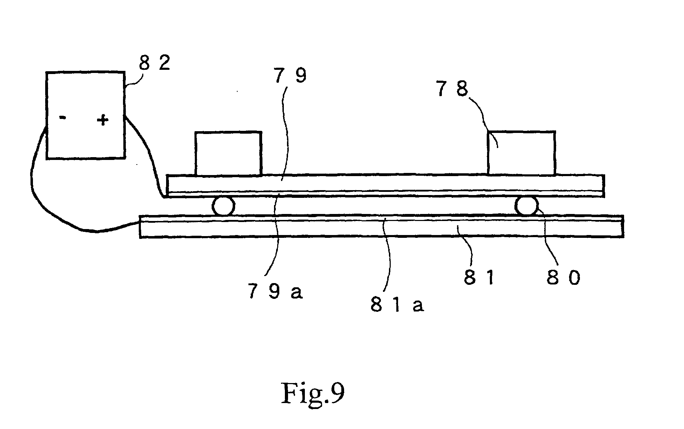

Fig. 9 shows a schematic drawing of an evaluation apparatus for the 2-pole-type field electron emission electrode. Referring now to reference numerals used in Fig. 9, 78 denotes glass pressure weights, 79 denotes an anode (glass anode) comprising a glass substrate and an ITO film 79a formed thereon, 80 denotes glass spacers (glass fibers), 81 denotes a cathode having a field electron emission film 81a of the present invention coated thereon, and 82 denotes a power source and a voltage/current meter.

The glass spacers 80 were arranged on the cathode 81, and the anode 79 was placed on the spacers so as to oppose the ITO film 79a to the field electron emission film 81a. The weights were placed on the anode 79 in order to ensure a necessary space. A voltage was applied from the power source 82 between the cathode 81 and anode 79, and voltage and current value were measured. A high-sensitivity camera was placed on the back side (the side on which the weights 78 were placed) of the anode 79 in order to monitor the light emission of the ITO film 79a, wherein any data expressing extremely biased light emission was not included in the evaluation.

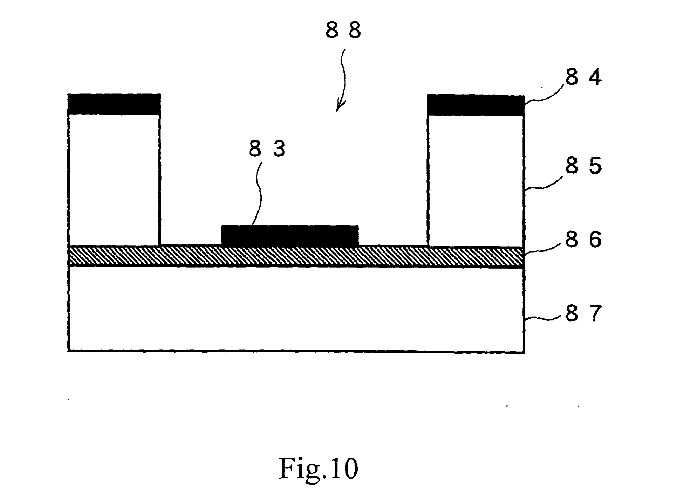

Fig. 10 is a schematic sectional view showing a structure of the 3-pole-type field electron emission electrode for evaluating the field electron emission film of the present invention. The 3-pole field electron emission electrode comprises a cathode 86, an insulating layer (insulating film) 85 and a gate electrode 84 sequentially formed in this order on a substrate (support) 87, an opening (through-hole) 88 formed commonly in the insulating layer 85 and gate electrode 84, and the field electron emission film 83 formed on the cathode 86 exposed in the opening 88.

In the fabrication process of this 3-pole structure, a metal film which serves as the cathode 86 was formed on a base 87 composed of a glass plate. The cathode 86 herein can be fabricated by forming a Cr film by sputtering. On the cathode 86, a field electron emission film 83 was formed, and further thereon an insulating film 85 was formed by the CVD process. The field electron emission film 83 was patterned into a 10-µm-diameter circle after the sintering of the ink. The insulating film 85 can be formed typically by the CVD process using tetraethoxysilane as a reactive gas. The thickness of the insulating film 85 was set to 10 µm in all Examples. The gate electrode 84 as an electron-drawing electrode was formed on the insulating film 85 by forming a Cr film to a thickness of 1 µm by sputtering or vacuum evaporation. A plurality of openings 88 of 30 µm in diameter were formed by etching. These openings were formed at a regular pitch of 100 µm both in the longitudinal and lateral directions.

Thus-obtained, 3-pole structure was set on the cathode portion for the 2-pole structure evaluation, wired so as to allow voltage application to the gate electrode, and voltage-current plots were obtained by the measurement similarly to as described in the evaluation of the 2-pole structure.

Using the samples for the 2-pole and 3-pole structures, the electrode composed of the field electron emission film of the present invention were evaluated according to the procedures described in the next.

The evaluation was made assuming a voltage value at a unit inter-electrode distance, which is causative of a current of 1 µA/cm² or above between both electrodes, as "threshold voltage". In this case, those causative of a threshold voltage of less than 3 V/µm were rated by ⓞ, 3 V/µm or above and less than 5 v/µm by ○, 5 V/µm or above and less than 15 V/ µm by Δ, and 15 V/µm or more by × . A priority was placed on either worse one of the evaluation results between 2-pole and 3-pole.

As for "surface property (surface roughness)" of the field electron emission film 83, Ra was measured at arbitrary three points using a non-contact-type, three-dimensional microscope "Micromap 530" (a product of Micromap), and those causative of an Ra (arithmetic mean roughness) of less than 1000 nm were rated by ○, 1000 nm or above and less than 1500 nm by Δ, and 1500 nm or above by ×, wherein ○ was judged as "acceptable".

### Comparative Example 1 [organic binder used, coated by the screen printing process]

The carbon nanotube used herein was obtained by purifying SWNTs (single-walled nanotubes), which was produced by using the arc discharge apparatus 60 (carbon nanotube manufacturing apparatus) shown in Fig. 7, by wet purification, wherein the one having a purity of 80 % or above was used.

Thus purified carbon nanotube, vinyl acetate as the adhesive, silver particle as the conductive particle (average particle size = 1 µm) and ethanol as the solvent, respectively in a predetermined amount, were thoroughly mixed, to thereby prepare an ink for forming the field electron emission electrode. The ink was coated on the predetermined electrode substrate to a thickness of 10 µm by the screen printing process. The ink coated film was dried in the air at 200 °C, sintered at 470 °C for 30 minutes, and surface-treated so as to allow the carbon nanotube to expose on the surface, and thereby the field electron emission electrode of 2-pole-type was fabricated, which was evaluated similarly to as described in the above.

### Comparative Example 2 [organic binder used, coated using a spray coating apparatus]

The carbon nanotube same as that used in Comparative Example 1, vinyl acetate as the adhesive, silver particle as the conductive particle (average particle size = 1 µm) and ethanol as the solvent, respectively in a predetermined amount, were thoroughly mixed, to thereby prepare an ink for forming the field electron emission electrode. The ink was coated on the electrode substrate 73a to a thickness of 5 µm using the spray apparatus shown in Fig. 8. The ink coated film was dried in the air at 200 °C, sintered at 470 °C for 30 minutes, and surface-treated so as to allow the carbon nanotube to expose on the surface, and thereby the field electron emission electrodes of 2-pole-type and 3-pole-type were obtained, and these electrodes were evaluated.

### Comparative Example 3 [sodium silicate used, coated using a spray apparatus]

Sodium silicate as the inorganic adhesive and an ion-exchanged water as the solvent were mixed, the sodium ion was removed by an ion exchange resin, and the eluate was added with an aqueous ammonium solution so as to adjust pH to 11. The mixed solution was then added with the carbon nanotube same as that used in Comparative Example 1, and the silver particle (average particle size = 1 µm), thoroughly mixed, and coated using a spray apparatus shown in Fig. 8 to a thickness of 5 µm. Thereafter the 2-pole-type field electron emission electrode and 3-pole-type field electron emission electrode were obtained according to the same procedures and conditions as those in Comparative Example 2, and these electrodes were evaluated.

Tables 1 and 2 below list heat-decomposable metal compounds used for the field electron emission film, size of the carbon nanotube, and evaluation results (threshold voltage and surface property) of the field emission electrode fabricated using the field electron emission film according to Comparative Examples 1 to 3, and Experimental Cases 1 to 34.

**Table 1**

| | Heat-decomposable metal compound | CNT concentration in metal film (Wt%) | CNT diameter (nm) | CNT length (µm) | Threshold voltage | Surface property |
|---|---|---|---|---|---|---|
| Comparative Example 1 | Vinyl acetate | 0.001 | 0.7 | 10 | ○ | × |
| Comparative Example 2 | Vinyl acetate | 0.001 | 0.7 | 10 | × | × |
| Comparative Example 3 | Sodium silicate | 0.001 | 0.7 | 10 | × | × |
| Experimental case 1 | DBTDA | 0.0008 | 0.7 | 10 | Δ | Δ |
| Experimental case 2 | DBTDA | 0.001 | 0.7 | 10 | ○ | ○ |
| Experimental case 3 | DBTDA | 40 | 0.7 | 10 | ○ | ○ |
| Experimental case 4 | DBTDA | 43 | 0.7 | 10 | × | × |
| Experimental case 5 | TButT | 0.0008 | 0.7 | 10 | × | Δ |
| Experimental case 6 | TButT | 0.001 | 0.7 | 10 | ○ | ○ |
| Experimental case 7 | TButT | 40 | 0.7 | 10 | ○ | ○ |
| Experimental case 8 | TButT | 43 | 0.7 | 10 | × | × |
| Experimental case 9 | TCT | 0.0008 | 0.7 | 10 | Δ | ○ |
| Experimental case 10 | TCT | 0.001 | 0.7 | 10 | ○ | ○ |
| Experimental case 11 | TCT | 40 | 0.7 | 10 | ○ | ○ |
| Experimental case 12 | TCT | 43 | 0.7 | 10 | × | × |
| Experimental case 13 | DBTDA | 0.001 | 0.7 | 10 | ○ | ○ |
| Experimental case 14 | DBTDA | 0.001 | 10 | 10 | ○ | ○ |
| Experimental case 15 | DBTDA | 0.001 | 100 | 10 | ○ | ○ |
| Experimental case 16 | DBTDA | 0.001 | 0.7 | 0.5 | ○ | ○ |

**Table 2**

| | Heat-decomposable metal compound | CNT concentration in metal film (Wt%) | CNT diameter (nm) | CNT length (µm) | Threshold voltage | Surface property |
|---|---|---|---|---|---|---|
| Experimental case 17 | DBTDA | 0.001 | 0.7 | 10 | ○ | ○ |
| Experimental case 18 | DBTDA | 0.001 | 100 | 100 | ○ | ○ |
| Experimental case 19 | TCT(100mol%) + AF(5mol%) | 0.001 | 0.7 | 10 | ○ | ○ |
| Experimental case 20 | TCT(100mol%) + AF(6mol%) | 0.001 | 0.7 | 10 | ⓞ | ○ |
| Experimental case 21 | TCT(100mol%) + AF(20mol%) | 0.001 | 0.7 | 10 | ⓞ | ○ |
| Experimental case 22 | TCT(100mol%) + AF(50mol%) | 0.001 | 0.7 | 10 | ⓞ | ○ |
| Experimental case 23 | TCT(100mol%) + AF(1000mol%) | 0.001 | 0.7 | 10 10 | ⓞ ⓞ | ○ ○ |
| Experimental case 24 | TCT(100mol%) + TPA(1mol%) | 0.001 | 0.7 | 10 | ○ | ○ |
| Experimental case 25 | TCT(100mol%) + TPA(3mol%) | 0.001 | 0.7 | 10 | ○ | ○ |
| Experimental case 26 | TCT(100mol%) + TPA(4mol%) | 0.001 | 0.7 | 10 | ⓞ | ○ |
| Experimental case 27 | TCT(100mol%) + TPA(50mol%) | 0.001 | 0.7 | 10 | ⓞ | ○ |
| Experimental case 28 | TCT(100mol%) + TPA(1000mol%) | 0.001 | 0.7 | 10 | ⓞ | ○ |
| Experimental case 29 | IC(100mol%) + TCT(3mol%) | 0.001 | 0.7 | 10 | ○ | ○ |
| Experimental case 30 | IC(100mol%) + TCT(4mol%) | 0.001 | 0.7 | 10 | ⓞ | ○ |
| Experimental case 31 | IC(100mol%) + TCT(10mol%) | 0.001 | 0.7 | 10 | ⓞ | ○ |
| Experimental case 32 | IC(100mol%) + TCT(15mol%) | 0.001 | 0.7 | 10 | ⓞ | ○ |
| Experimental case 33 | IC(100mol%) + TCT(20mol%) | 0.001 | 0.7 | 10 | ⓞ | ○ |
| Experimental case 34 | IC(100mol%) + TCT(1000mol%) | 0.001 | 0.7 | 10 | ⓞ | ○ |

It is clear from the results shown in Tables 1 and 2 that Experimental Cases 1 to 34 were successful in obtaining lower threshold voltages and more smooth-surfaced electrode as compared with those in Comparative Examples 1 to 3. The heat-decomposable metal compound in the field electron emission film in each of Experimental Cases 1 to 18 is a metal oxide composed of one species of metal bound with oxygen, wherein it is obvious from comparison of Experimental Cases 1 to 18 with Experimental Cases 19 to 34, that the electrode having a lower threshold voltage can be fabricated by forming the field electron emission film with a compound composed of a plurality of metals and oxygen, or with a metal, a halogen and oxygen. It is also known from Experimental Cases 19 to 34 that the electrode having an extremely low threshold voltage can be fabricated by adjusting the ratio of blending of the additive (dopant component) relatively to a high level.

As obvious from Tables 1 and 2, the field emission electrodes of the present invention are higher in the threshold voltage and superior in the surface property as compared with the electrodes according to Comparative Examples. It is found that use of the field electron emission film of the present invention makes it possible to form a thin film having a more excellent smoothness and electron emission property as compared with those of the conventional field electron emission film.

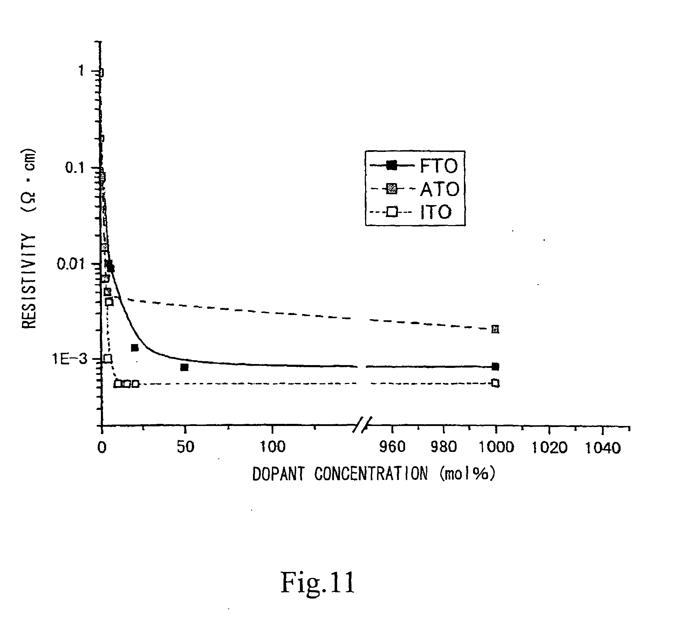

Fig. 11 is a graph showing relations between dopant concentration and resistivity for the field electron emission electrodes fabricated in Experimental Cases 19 to 34, variable with parameters of species of the compound composing the field electron emission film. The abscissa (dopant concentration) of Fig. 11. represents the number of moles of the dopant element to 100 moles of the metal element in the field electron emission film composed of "metal/dopant/oxygen".

Meanwhile, it is more preferable for the field electron emission electrode to have a smaller resistivity in view of obtaining the field electron emission display device having a better characteristics with respect to the threshold voltage. As is obvious from Fig. 11, the resistivity increases in the order of ITO<FTO<ATO, wherein ITO is the lowest. In other words, of Experimental Cases 19 to 34, Experimental Cases 29 to 34 are found to yield the electrodes having a lowest level of resistivity.

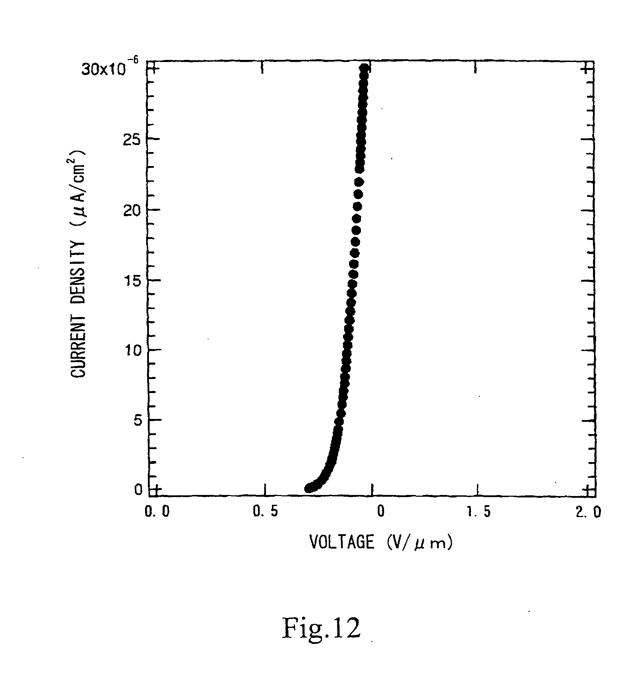

Fig. 12 shows IV characteristic curves of the 2-pole-structured field electron emission electrodes obtained in Experimental Case 30. The evaluation was made by keeping the anode and cathode distant by the spacers of 300 µm thick, and by applying a voltage to the anode so as to allow the field electron emission electrode on the cathode to emit electrons.

According to an IV characteristic of a typical 2-pole-structured field electron emission electrode, the threshold voltage falls within a range from 0.1 to 15 V/µm, and the drive voltage falls within a range from 0.03 to 5 V/µm. Experimental Case 30 showed a threshold voltage of 0.9 V/µm and a drive voltage of 0.3 V/µm.

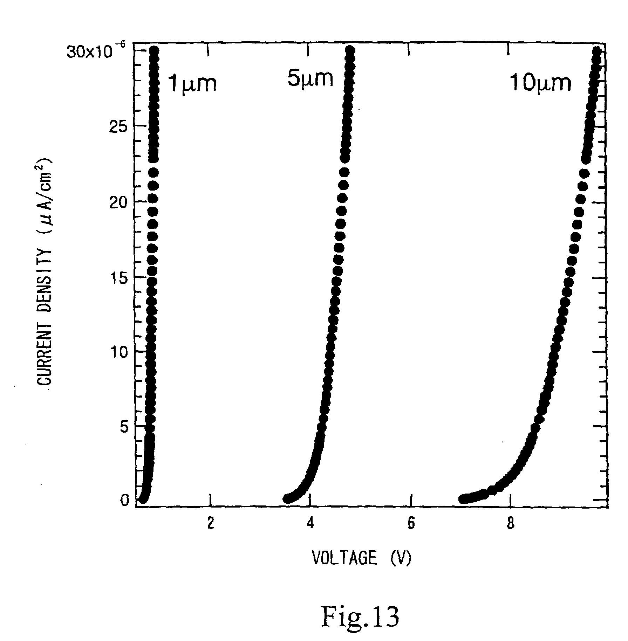

Fig. 13 shows IV characteristic curves of the 3-pole-structured field electron emission electrodes obtained in Experimental Case 30, variable with parameters of thickness of the insulating film (see Fig. 10). In the process of obtaining the characteristic curves, the insulating layer was provided on the cathode, the gate electrode was provided further thereon, and the anode was disposed while placing the spacers (typically in a size of 0.3 mm to 3 mm) in between. The gate electrode was applied with a voltage for allowing the cathode to emit electrons so as to provide the electrons with a momentum (in order to accelerate the electrons) necessary for allowing the fluorescent material formed on the anode to cause light emission. Evaluation results obtained for thicknesses of the insulating layer of 1 µm, 5 µm and 10 µm were shown in Fig. 13.

According to an IV characteristic of a typical 3-pole-structured field electron emission electrode having a thickness of the insulating layer of 1 µm, the threshold voltage falls within a range from 0.1 to 15 V/µm, and the drive voltage falls within a range from 0.03 to 5 V/µm. A thickness of the insulating layer of 5 µm results in a threshold voltage of 0.5 to 75 V, and a drive voltage of 0.15 to 25 V. A thickness of the insulating layer of 10 µm results in a threshold voltage of 1 to 150 V, and a drive voltage of 0.3 to 50 V.

As for values of the threshold voltage and drive voltage for Experimental Case 30, (a) a thickness of the insulating layer of 1 µm resulted in a threshold voltage of 0.9 V and a drive voltage of 0.3 V, (b) a thickness of the insulating layer of 5 µm resulted in a threshold voltage of 4.5 V and a drive voltage of 1.5 V, and (c) a thickness of the insulating layer of 10 µm resulted in a threshold voltage of 9 V and a drive voltage of 3 V.

The present invention was successful in forming a film having only a small amount of residual gas after the sintering, by using the heat decomposition product obtained by heat decomposition of the heat-decomposable metal compound as an adhesive to the carbon-nanotube-containing electron emission film. The above-described Examples adopted dibutyl tin diacetate, tin tetrachrloide, tin tetrabutoxide, indium chloride, antimony triphenyl or antimony chloride as the representative heat-decomposable, organo-metallic compound, and ethanol as the solvent, whereas the present invention is by no means limited thereto, and use of other heat-decomposable metal compound and solvent may also yield good results.

As is obvious from the description in the above, the present invention is successful in forming the field electron emission film less in the amount of residual gas and stable in the amount of emitted electrons, by using the heat decomposition product of the metal compound as an adhesive in the field electron emission film. As a consequence, the field electron emission display device using the field electron emission film of the present invention can be configured as having a stable luminance.

It is also made possible by the present invention to provide both of adhesiveness to the substrate and conductivity, so that it is no more necessary to add any conductive particle to obtain electric conductivity of the film, unlike in the prior art, and this makes it possible to thin the film. Thinning of the film also makes it possible to equalize the resistivity value over the entire film, and to form the field electron emission film excellent in the smoothness and in electron emission property.

## Claims

1. A field electron emission film used for a field electron emission electrode, comprising:
carbon nanotube structural body of 0.001 to 40 % by weight; and
a heat decomposition product obtained by heat decomposition of a heat-decomposable metal compound.

2. The field electron emission film as cited in claim 1, wherein;
said heat-decomposable metal compound is an organo-metallic compound.

3. The field electron emission film as cited in claim 1, wherein;
said heat-decomposable metal compound is metal salt.

4. The field electron emission film as cited in claim 1, wherein;
said heat-decomposable metal compound is an organo-metallic salt compound.

5. The field electron emission film as cited in claim 1, wherein;
said heat-decomposable metal compound is metal complex.

6. The field electron emission film as cited in claim 1, wherein;
said heat decomposition product is composed of a plurality of metals.

7. The field electron emission film as cited in claim 6, wherein;
said plurality of metals are Sn and at least one metal selected from In and Sb.

8. The field electron emission film as cited in claim 7, wherein;
said plurality of metals are Sn and In, where ratio of Sn to In is 6 at% or more.

9. The field electron emission film as cited in claim 1, wherein;
thickness of said field electron emission film is 0.05 µm to 20 µm.

10. A field electron emission electrode of 2-pole type, comprising:
a cathode and a field electron emission film sequentially formed on a support, wherein;
said field electron emission film comprises 0.001 to 40 % by weight of carbon nanotube structural body and a heat decomposition product obtained by heat decomposition of a heat-decomposable metal compound.

11. A field electron emission electrode of 3-pole type, comprising:
a cathode, an insulating film, and a gate electrode sequentially formed on a support;
an opening formed in common in the insulating film and the gate electrode; and
a field electron emission film formed at least on the cathode exposed in the opening, wherein;
said field electron emission film comprises 0.001 to 40 % by weight of carbon nanotube structural body and a heat decomposition product obtained by heat decomposition of a heat-decomposable metal compound.

12. A field electron emission display device comprising:
a cathode panel having a plurality of field electron emission electrodes disposed thereon; and
an anode panel having a fluorescent layer and an anode disposed thereon, the both panels being bonded at the individual circumferential portions thereof, wherein;
said electrode as cited in claim 10 or 11 is used as the field electron emission electrode.
